# EUROPÄISCHE PATENTANMELDUNG

(11) **EP 4 494 479 A1**
(43) Veröffentlichungstag der Anmeldung: **22.01.2025**
(21) Anmeldenummer: 24188390.9
(22) Anmeldetag: 12.07.2024
(51) Int. Cl.: A23J 3/16, A23J 3/22, A23J 3/26, A23K 10/30, A23K 20/147, A23K 20/158, A23K 20/163, A23K 40/25, A23K 50/45, A23K 50/48, A23L 29/262

(54) **VEGANES TIERFUTTER**

(30) Priorität: 18.07.2023 DE 102023118996
(71) Anmelder: Landguth Heimtiernahrung GmbH, 26632 Ihlow / Riepe (DE)
(72) Erfinder: Böschen, Alina, 26632 Ihlow / Riepe (DE); Kruse, Fabian, 26632 Ihlow / Riepe (DE); Ommen, Kerstin, 26632 Ihlow / Riepe (DE); Trofimow, Slawa, 26632 Ihlow / Riepe (DE)
(74) Vertreter: Eisenführ Speiser

(57) **Zusammenfassung**

Die vorliegende Erfindung betrifft ein veganes Tierfutter, umfassend wenigstens zwei Phasen, wobei die eine Phase eine gelartige Masse ist und die zweite Phase eine stückige Masse ist und wobei die zweite Phase aus Fleischersatzmasse besteht und 15 - 50 % der Fläche des Tierfutters belegt. Die vorliegende Erfindung betrifft ferner ein Verfahren zur Herstellung eines erfindungsgemäßen veganen Tierfutters.

## Beschreibung

Die vorliegende Erfindung betrifft ein veganes Tierfutter, umfassend wenigstens zwei Phasen, wobei die eine Phase eine gelartige Masse ist und die zweite Phase eine stückige Masse ist und wobei die zweite Phase aus Fleischersatzmasse besteht und 15 - 50 % der Fläche des Tierfutters belegt. Die vorliegende Erfindung betrifft ferner ein Verfahren zur Herstellung eines erfindungsgemäßen veganen Tierfutters.

In vielen Ländern steigt der Anteil an Vegetariern, Veganern und Flexitariern jährlich an, wodurch auch die Nachfrage an Fleischersatzprodukten steigt. Gründe für einen reduzierten Fleischverzehr sind der Tier- und Klimaschutz.

Es zeigt sich, dass der Fleischkonsum in vielen Ländern rückläufig ist und damit sinken auch die Schlachtungen an Tieren. Somit steht der Futtermittelindustrie in der Zukunft ebenfalls immer weniger Fleisch zur Verfügung.

Dementsprechend besteht ein steigender Bedarf an Futtermitteln für Heimtiere, in denen Fleischersatzprodukte anstelle von Fleisch eingesetzt werden. Zwar gibt es für Tierbesitzer aus ethischen, ökologischen oder anderen Gründen Anlass, auch bei der Fütterung ihrer Tiere auf fleischarme Produkte zurückzugreifen. Andererseits sind Tierbesitzer im Regelfall um das Wohl ihrer Tiere besorgt und gerade bei fleischfressenden Tieren muss ein fleischfreies Futtermittel zunächst den Tierbesitzer überzeugen und dann auch noch vom Tier angenommen werden.

Die größten Mengen an fleischhaltigen Futtermitteln im Heimtierbedarf werden an Hunde und Katzen verfüttert.

Durch die Besonderheiten des Verdauungstraktes werden Hunde zu den Carni-Omnivoren, den Fleisch- und Allesfressern, gezählt. Eine fleischfreie Fütterung des Hundes ist daher laut Experten möglich, solange ausreichend Protein bzw. essenzielle Aminosäuren im Futter vorhanden sind.

Beim Analysieren des Heimtiermarktes fällt auf, dass bereits angebotenes veganes Hundenassfutter eher einem Gemüseeintopf ähnelt oder lediglich als Gemüsebeilage zur Ergänzung zugefüttert wird. Hinzu kommt, dass diese Produkte wenig schmackhaft sind und sehr eintönig aussehen.

Auch bei Katzen und anderen fleischfressenden Heimtieren ist eine wenigstens teilweise, bevorzugt aber eine vollständige Ersetzung des Fleischanteiles in der Nahrung wünschenswert.

In der WO 2016/055940 A1 wird die Herstellung von Nicht-Fleisch-Produkten beschrieben. Es fehlen aber wesentliche Angaben für eine vorteilhafte Ausgestaltung des Produktes selbst.

Vor diesem Hintergrund war es Aufgabe der vorliegenden Erfindung, ein vollständig veganes Tierfutter zu entwickeln, das sowohl von den Tierbesitzern als auch von den Tieren angenommen wird, bevorzugt in einem ähnlichen Maße wie vergleichbare fleischhaltige Produkte. Dabei war es bevorzugt, dass das erfindungsgemäß bereitzustellende vegane Tierfutter in der Sensorik, Ernährungsphysiologie und Verdaulichkeit und insbesondere auch in der Optik einem fleischbasierten Futter, bevorzugt einem Vollfutter und ganz besonders bevorzugt einem Hunde-Vollfutter ähnelt.

Diese Aufgabe wird gelöst durch ein veganes Tierfutter, umfassend wenigstens zwei Phasen, wobei die erste Phase eine gelartige Masse ist und die zweite Phase eine stückige Masse ist, und wobei die zweite Phase aus Fleischersatzmasse besteht und 15 - 50 % der Fläche des Tierfutters belegt.

Vegan im Sinne des vorliegenden Textes bedeutet, dass das Produkt vollständig frei von tierischen Bestandteilen ist.

Ein Fleischersatz im Sinne des vorliegenden Textes ist ein Produkt, das so eingesetzt wird wie üblicherweise fleischhaltige und/oder fischhaltige Produkte.

Als "Phasen" im Sinne des vorliegenden Textes gelten Bereiche innerhalb des veganen Tierfutters, die a) optisch voneinander zu unterscheiden sind und b) bevorzugt deren Viskosität innerhalb der Phase um weniger als 10 % um den Mittelwert schwankt (arithmetisches Mittel), weiter bevorzugt gilt dies für weitere rheologische Eigenschaften. Dabei wird die Viskosität im Zweifelsfall mit der unten beschriebenen Methode bestimmt.

Eine Besonderheit für die Phaseneinteilung im Sinne der vorliegenden Erfindung ist, dass Fleischersatzmasse, auch wenn sie optisch unterschieden ist (z. B. durch unterschiedliche Färbung), aber hinsichtlich des oben genannten Merkmales b) übereinstimmt, als eine Phase gerechnet wird.

"Gelartig" im Sinne des vorliegenden Textes bedeutet, dass es sich um eine gelierte Flüssigkeit handelt, also eine Dispersion, bestehend aus einer flüssigen und einer festen Phase. Bevorzugt umfasst die gelartige Masse zu > 90 Gew-% Flüssigkeit, bevorzugt Wasser, sowie geeignete Dickungsmittel und Zusatzstoffe.

Selbstverständlich ist es möglich, dass das erfindungsgemäße vegane Tierfutter auch weitere optisch unterscheidbare Bestandteile hat, insbesondere Kräuter und/oder Stücke von Gemüse und/oder Obst, bevorzugt ausgewählt aus der Gruppe bestehend aus Möhre, Kartoffel, Brokkoli, Erbse, Jackfruit, Kürbis, Pastinake, Spinat und Aroniabeere.

Diese Bestandteile würden dann bei der Flächenbestimmung (vgl. weiter unten) weder zur ersten noch zur zweiten Phase dazuzählen.

Zur Bestimmung der Flächenanteile der einzelnen Phasen wird im Zweifelsfall wie folgt vorgegangen:
Es werden 10 Querschnitte mit einer Fläche von mindestens 35 cm² angefertigt und dieser mit einer geeigneten optischen Software auf die Anteile der jeweiligen Phasen ausgewertet. Aus den 10 Messungen wird das arithmetische Mittel für die Anteile der einzelnen Phasen ermittelt.

In erster Näherung kann die Auswertung auch optisch mit dem bloßen Auge und durch Ausmessen erfolgen, im Zweifelsfall ist aber das Ergebnis einer nachvollziehbaren Software-Auswertung ausschlaggebend.

Anzumerken ist noch, dass im Rahmen der optischen Auswertung die Fleischersatzmasse auf keinen Fall zur ersten Phase dazuzählt und als die erste Phase immer diejenige Phase gezählt wird, die die geringste Viskosität innerhalb des jeweiligen Abschnittes hat.

Es hat sich überraschenderweise herausgestellt, dass das erfindungsgemäße vegane Tierfutter von Endverbrauchern, also den Tieren, vergleichbar gut wie fleischhaltige Produkte gleicher Zusammensetzung, mit lediglich dem Ersatz der Fleischersatzmasse durch tierische Fleischprodukte akzeptiert wird. Dabei hat sich gezeigt, dass für die Akzeptanz beim Tier auch die Aufteilung in zwei Phasen eine erhebliche Rolle spielt: Bevorzugt wird das zweiphasige Futter, insbesondere in den erfindungsgemäßen Aufteilungsverhältnissen gegenüber einphasigem Futter. Außerdem hat sich herausgestellt, dass das erfindungsgemäße Tierfutter auch bei den Käufern, also im Regelfall den Tierbesitzern, besonders gut akzeptiert wird.

Ferner hat sich herausgestellt, dass bei den gegebenen erfindungsgemäßen Flächenverhältnissen ein Futter vorliegt, dass sich im Abfüllprozess besonders gut verarbeiten lässt, was - ohne an die Theorie gebunden zu sein - darauf zurückgeführt wird, dass die (festere Fleischersatzmasse) in der gelartigen Phase nicht zu viel Raum einnimmt, was die Abfüllung erleichert.

Erfindungsgemäß bevorzugt ist, dass die zweite Phase aus Fleischersatzmasse gleichmäßig über den Querschnitt verteilt ist.

Unter gleichmäßig verteilt im Sinne der vorliegenden Erfindung ist gemeint, dass beim Misch- und/oder Abfüllprozess keine Bereiche geschaffen werden, in denen eine gezielte Anreicherung der (stückigen) zweiten Phase im Gesamtfutterkörper entsteht. Selbstverständlich ist bei dieser bevorzugten Ausgestaltungsform nicht ausgeschlossen, dass es (zufällige) lokale Konzentrationen der zweiten Phase gibt, eine entsprechende Konzentration würde in einem anderen Querschnitt aber nicht an der gleichen Stelle anzufinden zu sein, insbesondere dann, wenn der Querschnitt ausreichend entfernt ist von dem Vergleichsquerschnitt.

Bevorzugt ist ein erfindungsgemäßes veganes Tierfutter, wobei es sich um Hunde- oder Katzenfutter handelt, wobei Hundefutter bevorzugt ist.

Es hat sich herausgestellt, dass bei Hunden und Katzen, insbesondere bei Hunden, eine ganz besonders hohe Akzeptanz für das erfindungsgemäße vegane Tierfutter gegeben ist.

Weiter bevorzugt ist ein erfindungsgemäßes veganes Tierfutter, wobei das Tierfutter ein Alleinfutter ist, bevorzugt nach den Vorgaben des Futtermittelrechtes und / oder der FEDIAF (European Pet Food Industry Federation.

Erfindungsgemäß bevorzugt ist ein erfindungsgemäßes veganes Tierfutter, wobei die zweite Phase aus wenigstens zwei optisch unterscheidbare Stücktypen besteht. Diese Variante ermöglicht es, durch den Fleischersatz zumindest optisch den Eindruck zu erwecken, dass verschiedene Fleischarten (in Form von Fleischersatz) im erfindungsgemäßen veganen Tierfutter enthalten sind. Dies erhöht die Akzeptanz bei Tierbesitzern und Tieren in einigen Fällen.

Das erfindungsgemäße vegane Tierfutter ist dann in der Lage, sämtliche ernährungsphysiologische Bedürfnisse des Tieres, bevorzugt eines Hundes, zu befriedigen. Dies ist insbesondere möglich, indem weitere Bestandteile, wie z. B. Spurenelemente, essentielle Aminosäuren und weitere wichtige Bestandteile dem erfindungsgemäßen veganen Tierfutter beigefügt werden. Dabei kann diese Beifügung sowohl in die erste Phase als auch in die zweite Phase erfolgen, je nach Bedarf und Herstellungsvoraussetzungen. Dabei ist es im Sinne der vorliegenden Erfindung selbstverständlich, dass auch die weiteren Bestandteile vegan sein müssen, wie dies natürlich auch für die erste und die zweite Phase im Sinne des vorliegenden Textes der Fall sein muss.

Bevorzugt ist ein erfindungsgemäßes veganes Tierfutter, wobei die erste Phase 20 - 60 Gew-%, bevorzugt 30 - 58 Gew-% und weiter bevorzugt 40 - 55 Gew-% bezogen auf das Gesamtgewicht des Tierfutters ausmacht.

Ebenfalls bevorzugt ist ein erfindungsgemäßes veganes Tierfutter, wobei die zweite Phase 20 - 50 Gew-%, bevorzugt 30 - 40 Gew-% bezogen auf das Gesamtgewicht des Tierfutters ausmacht.

Diese Gewichtsanteile haben sich als besonders gut akzeptiert bei Tieren und deren Besitzern herausgestellt.

Erfindungsgemäß bevorzugt ist ein erfindungsgemäßes veganes Tierfutter, wobei die zweite Phase ein veganer Fleischersatz ist, umfassend 20 - 30 Gew-% bezogen auf das Gesamtgewicht des Fleischersatzes hydratisiertes Texturat, wobei das hydratisierte Texturat einen Wasseranteil von 65 - 80 Gew-% bezogen auf das hydratisierte Texturat umfasst, und wobei das hydratisierte Texturat eine durchschnittliche Stücklänge von ≥ 15 mm, bevorzugt ≥ 20 mm besitzt.

Texturat im Sinne des vorliegenden Textes wird auch als texturiertes Pflanzenprotein bezeichnet und ist aus seiner ursprünglich globuläre Struktur in eine fleischartige Faserstruktur überführtes pflanzliches Eiweiß. Damit muss zur Erzielung dieser Strukturveränderung zunächst unter Lösung der intermolekularen Wechselwirkung eine Auffaltung der Peptidketten der globulären Proteine (Sphäroproteine) erfolgen und dann müssen die gestreckten Peptidketten durch Ausbildung intermolekularer Wechselwirkungen stabilisiert werden. Als bevorzugte Ausführungsmaterialien können Protein aus Soja, Weizen, Erdnuss, Sesam, Raps und/oder Hefe verwendet werden. Die Umwandlung in Texturat kann bevorzugt aus zwei Verfahren erreicht werden:
a) per Spinnprozess, dabei wird Ausgangsprotein aufgelöst und durch eine Spinndüse in geeignete, die Koagulation auslösende Fallbäder gepresst. Beim anschließenden Aufwickeln werden die Proteinfasern gestreckt und zu Bündeln von 10 - 20 mm Durchmesser zusammengefasst, wobei die Ausbildung intermolekularer Wechselwirkungen mechanische Festigkeit der Faserbündel erhöht. Nach weiteren Nachbehandlungsschritten werden die präparierten Faserbündel erhitzt und geschnitten.
b) per Extrusionsprozess, dabei wird das feuchte Ausgangsprotein in einem Extruder bei hohem Druck und hoher Temperatur starken Scherkräften ausgesetzt, durch die eine partielle Auffaltung und Streckung der globulären Proteine erfolgt, die sich anschließend in Fließrichtung anordnen. Gegenüber dem Spinnprozess führt der Extrusionsprozess allerdings nicht zu echten Fasern, sondern nur zu faserartigen Partikeln. Dennoch ist im Sinne der vorliegenden Anmeldung bevorzugt das Texturat auf diese Weise hergestellt worden.

"Hydratisiertes" Texturat im Sinne des vorliegenden Textes ist dabei Texturat, nach einem Quellvorgang in Wasser.

Die Stücklänge von Texturatstücken wird bestimmt durch Messung der längsten Gerade innerhalb des einzelnen Texturatstückes. Dabei werden für die Bestimmung der durchschnittlichen Länge Texturatstücke nicht berücksichtigt, die durch einen Schneideprozess verkürzt wurden.

Die "durchschnittliche" Stücklänge im Sinne des vorliegenden Textes (hier insbesondere für das Texturat) wird bestimmt als das arithmetische Mittel der jeweiligen Stücklänge.

Als weiter bevorzugt hat sich ein erfindungsgemäßer veganer Fleischersatz herausgestellt, wobei das Texturat Stücke einer durchschnittlichen Stücklänge von ≥ 25 mm weiter bevorzugt ≥ 28 mm besitzt, wenn das Texturat eingemischt wird. Bei bestimmten Herstellungsverfahren wie z.B. dem Extrahieren, kann dann eine Verkürzung der Stücklänge erfolgen.

Der erfindungsgemäß bevorzugt einzusetzende vegane Fleischersatz hat sich überraschenderweise als besonders gut im erfindungsgemäßen veganen Tierfutter von den Verbrauchern akzeptiert herausgestellt, insbesondere von Tieren und hier ganz besonders von Hunden. Dabei werden sogar Akzeptanzraten erreicht, die Fleischprodukten nahekommen.

Gleichzeitig hat sich herausgestellt, dass der Einsatz des hier beschriebenen hydratisierten Texturates die Verarbeitbarkeit und die Handhabbarkeit des Fleischersatzes allgemein und insbesondere im erfindungsgemäßen veganen Tierfutter in besondere Weise gewährleistet. Dabei scheint - ohne an eine Theorie gebunden zu sein - die eingesetzte Stücklänge des Texturates besonders geeignet zu sein.

Bevorzugt ist in diesem Zusammenhang, dass die mittlere Stücklänge des Texturates ≤ 50 mm, weiter bevorzugt ≤ 40 mm ist.

Bevorzugt ist ein erfindungsgemäß bevorzugt einzusetzender veganer Fleischersatz, wobei das Texturat Sojaprotein-Texturat ist.

Es hat sich herausgestellt, dass diese Form des Texturates einerseits technisch besonders gut einsetzbar ist, andererseits aber auch über hohe Akzeptanzwerte bei den Zielverbrauchern, ganz besonders Hunden verfügt.

Erfindungsgemäß bevorzugt ist ein erfindungsgemäß bevorzugt einzusetzender Fleischersatz, umfassend 20 bis 30 Gew-% bezogen auf das Gesamtgewicht des Fleischersatzes weiteres pflanzliches Protein.

Die bevorzugte Menge an pflanzlichem Protein ist einerseits für die Akzeptanzwerte gut, andererseits erfüllt sie ernährungsphysiologische Anforderungen in einem hohen Maße.

Erfindungsgemäß bevorzugt ist ein erfindungsgemäß bevorzugt einzusetzender veganer Fleischersatz, wobei das weitere Protein aus Sojaprotein, bevorzugt aus Sojaproteinisolat besteht.

Der Einsatz von Sojaprotein ist schon deshalb vorteilhaft, da Sojaprotein breit verfügbar ist. Zudem zeigt es bei den Verbrauchern gute Akzeptanzwerte, ist gut verarbeitbar und hat insbesondere in Kombination mit der bevorzugten Variante, dass das Texturat Sojaprotein ist, den Vorteil, dass nur eine Proteinquelle für den erfindungsgemäßen veganen Fleischersatz eingesetzt wird.

Bevorzugt ist ein erfindungsgemäß bevorzugt einzusetzender veganer Fleischersatz, umfassend 5 bis 12 Gew-% bezogen auf das Gesamtgewicht des Fleischersatzes pflanzliches Öl, bevorzugt Sonnenblumenöl.

Es hat sich gezeigt, dass die bevorzugten Ölmengen, insbesondere in Form von Sonnenblumenöl dem Produkt bei guter Verfügbarkeit gute Nährwerte einerseits und andererseits gute Akzeptanzwerte vermitteln.

Erfindungsgemäß bevorzugt ist ein erfindungsgemäß bevorzugt einzusetzender veganer Fleischersatz, umfassend 0,4 bis 3 Gew-% bevorzugt 0,5 - 2,5 Gew-% bezogen auf das Gesamtgewicht des Fleischersatzes eines Verdickungsmittels, bevorzugt Methycellulose.

Das Verdickungsmittel in den entsprechenden Mengen führt dazu, dass die erfindungsgemäßen veganen Fleischersatzprodukte im erfindungsgemäßen Produkt eine beim Zielverbraucher, insbesondere bei Tieren, besonders gute Akzeptanz erzeugen.

Erfindungsgemäß bevorzugt ist ein erfindungsgemäß bevorzugt einzusetzender veganer Fleischersatz, umfassend ein Färbungsmittel aus natürlichen Quellen, bevorzugt Apfelextrakt und/oder Tomatenpulver.

Mit einer entsprechenden Färbung ist es möglich optisch unterschiedliche Eindrücke zu erzeugen, insbesondere dann, wenn verschieden gefärbte erfindungsgemäße Fleischersatzprodukte gemeinsam eingesetzt werden. Dann ist es möglich, beispielsweise rein optisch zwei Fleischsorten zu imitieren. Dies kann - je nach Produkt - zu einer erhöhten Akzeptanz beim Verbraucher führen. Dies ist insbesondere auch dann der Fall, wenn es sich bei dem Endprodukt um ein Futtermittel handelt, da in solchen Fällen nicht nur die Akzeptanz beim Endverbraucher (die der Tiere, für die das Futtermittel gedacht ist) notwendig ist, sondern auch bei demjenigen, der das Futter für das Tier kauft, also im Regelfall bei dem Tierhalter.

Erfindungsgemäß bevorzugt ist ein erfindungsgemäß bevorzugt einzusetzender veganer Fleischersatz in Form eines Extrudates.

Durch ein Extrusionsverfahren ist es möglich, den erfindungsgemäß bevorzugt einzusetzenden Fleischersatz in besonders günstiger Form und Textur herzustellen. Es hat sich gezeigt, dass Extrudate bei den Zielverbrauchern des Fleischersatzes besonders gut akzeptiert werden.

Bevorzugt ist, dass der erfindungsgemäß bevorzugt einzusetzender vegane Fleischersatz ohne Konservierungsmittel und/oder ohne künstliche Farbstoffe hergestellt ist. Das gilt auch für die erste Phase im Besonderen sowie für das gesamte erfindungsgemäße vegane Tierfutter.

Bevorzugt ist, dass der erfindungsgemäße bevorzugt einzusetzende vegane Fleischersatz lediglich aus den Bestandteilen Öl, hydratisiertes Texturat, pflanzliches Protein, Verdickungsmittel und Wasser besteht, wobei weiter bevorzugt ist, dass sowohl das Texturat als auch das pflanzliche Protein auf Sojabasis hergestellt wurden.

Alternativ ist es in einigen Fällen bevorzugt, dass außer den vorgenannten Bestandteilen noch Nährstoffe, insbesondere Vitamine und Mineralstoffe, gegebenenfalls mit einem Trägermaterial für diese Stoffe als weiterer Bestandteil im erfindungsgemäßen bevorzugt einzusetzenden veganen Fleischersatz enthalten sind und/oder der ersten Phase des erfindungsgemäßen veganen Tierfutters sind.

Erfindungsgemäß bevorzugt ist ferner, dass das erfindungsgemäße vegane Tierfutter frei von Gluten ist.

Erfindungsgemäß bevorzugt ist, dass der bevorzugt erfindungsgemäß einzusetzende vegane Fleischersatz (zweite Phase) nach dem Extrudieren schneidfähig ist, was bedeutet, dass nach einem Scheideprozess die (geschnittene) Form aufrechterhalten wird.

Durch Schneiden entstehen fleischartige (Einzel-)Stücke, die in erfindungsgemäßem Tierfutter besonders gut eingesetzt werden können.

Bevorzugt in diesem Zusammenhang ist, dass die Einzelstücke wenigstens eine Kantenlänge, bevorzugt wenigstens zwei Kantenlängen im Bereich von 1,5 - 5 cm besitzen, bevorzugt 3 - 4 cm für eine Kantenlänge und 1 - 3 cm für eine andere. Bevorzugte Dicke der Einzelstücke ist dabei 0,3 - 0, 7cm, bevorzugt 0,4 - 0,6 cm.

Teil der Erfindung ist auch ein Verfahren zur Herstellung eines erfindungsgemäßen Tierfutters, umfassend die Schritte:
a) Bereitstellen von Material für die erste Phase,
b) Bereitstellen von Material für die zweite Phase,
c) gegebenenfalls Bereitstellen von Obst- und/oder Gemüsestücken und/oder Kräutern und
d) Mischen der bereitgestellten Zutaten.

### Beispiele

### Beispiel 1: Herstellung eines erfindungsgemäß bevorzugt einzusetzendem veganen Fleischersatzes (zweite Phase)

### Produktzusammensetzung

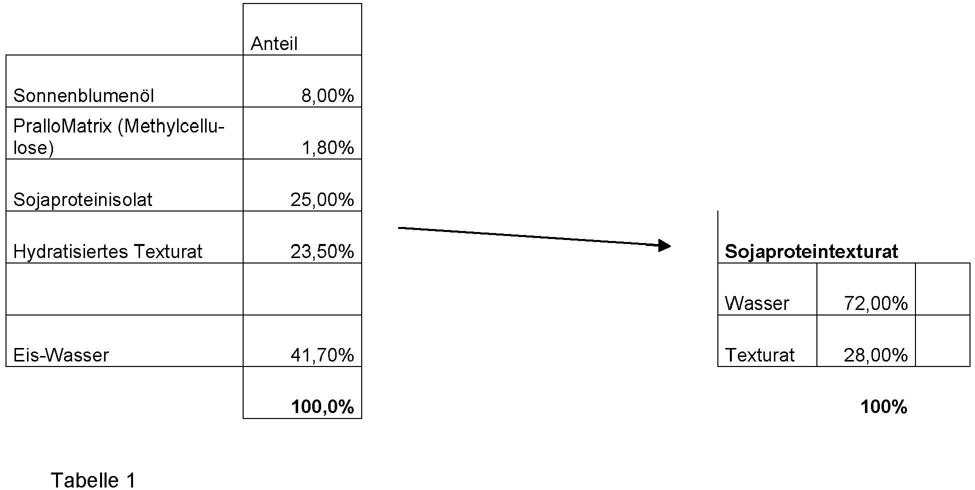

Die Methylcellulose (PralloMatrix) (PRALLO^{®} Matrix V - MARKLAND Ingredients GmbH) wird mit kaltem Wasser und Öl (SUNFLOWER OIL, REFINED - Henry Lamotte oils GmbH) mithilfe eines Seydelmann Kutters K 64 AC-8 Va zu einer homogenen Suspension verarbeitet. Als nächstes werden alle restlichen Trockenstoffe zum Kutter hinzugegeben. Die Masse wird gemischt. Daraufhin werden die Proteintexturate (Sojatexturat (Soytexture Slices S) - Soy Austria GmbH) hinzugegeben. Um die Texturate unterzumischen, wird der Kutter auf den Rückwärtsgang gestellt. Die fertige Masse wird daraufhin in einen 300I Normwagen gefördert.

Der Normwagen wird dem Vakuumfüller der Firma Vemag, PP20E zugegeben. Dieser fördert die Masse kontinuierlich mit einem eingestellten Druck 12-16 bar bei 8-10°C dem PowerHeater zu.

Im PowerHeater PH100-5 sind fünf Schnecken, die mit einer eingestellten Geschwindigkeit das Produkt fördern. Die Temperatur im Inneren der Anlage wird durch Zugabe von Dampf geregelt. Durch das Zusammenspiel des Druckes und der Temperatur (90°C, 10 - 16 bar, Schneckengeschwindigkeit 60-80%) wird aus der Knetmasse ein langer Streifen, welcher eine Fleischoptik hat.

Diese Streifen werden anschließend mit Rasiermesserklingen und einem Schneidwerkzeug (FlexiCut) in nicht-genormte Stücke geschnitten. Diese Stücke werden direkt nach dem Schneideprozess auf max. 6°C mit einem Wendelfroster heruntergekühlt und eingelagert. Die Maße der Stücke sind ca. 5x2,3x0,5cm.

### Beispiel 2: Herstellung eines erfindungsgemäßen veganen Tierfutters

Die Fleischersatzprodukte aus dem Beispiel 1 werden zu einem erfindungsgemäß veganen Fertigprodukt gemischt mit folgenden Bestandteilen:
- 35,00%: erfindungsgemäßer veganer Fleischersatz aus Beispiel 1
- 4,00%: Möhren
- 5,00%: Kartoffeln
- 2,00%: Erbsen

Und für die erste Phase:
- 1,50%: Sonnenblumenöl
- 50,24%: Wasser
- 0,10%: Agar Agar (Agar Agar, Ter Ingredients GmbH & Co.KG)
- 0,50%: Guar Gum (Guar Gum Powder Food Grade - Guaran Chemicals Private Limited)
- 0,20%: Calciumcarbonat
- 0,10%: Natriumtripolyphosphat
- 0,20%: Natural Chicken Flavour (Vegetaste 007 Natural Chicken Flavour, Solina Belgium AG/NV)
- 0,02%: Taurin
- 0,04%: L-Carnitin

Die veganen Fleischersatzstücke aus Beispiel 1 wurden als geschnittene Stücke eingesetzt und mittels eines Paddelmischers mit den Trockenstoffen und dem Wasser vermischt, bis eine Masse entstand, in der die veganen Fleischersatzstücke homogen verteilt waren. Um die gewünschte Viskosität zu erreichen, wurden die oben aufgeführten Fertigungsmittel einschließlich des Öls hinzugegeben, es ergab sich eine Masse mit stückigen Fleischersatzteilen mit einer typischen Optik von Hundefutter.

Das erfindungsgemäße vegane Hundefutter wurde nachfolgend optisch vermessen, hierzu wurden von fünf Kreisabschnitten mit 38,5 cm² Fläche und einer Dicke von 3 cm jeweils die Vorder- und die Rückseite vermessen. Für den Anteil der Phase zwei (Fleischersatzproduktstücke) ergaben die Messungen folgende Werte: 19%, 23,6%, 27,3% 34,3%, 38,8%, 21,1% 36,8%, 23,5%, 28,0%, 33,6%.

Hieraus ergibt sich ein Mittelwert des Flächenanteils für die zweite Phase von 28,6%.

### Beispiel 3: Akzeptanztest

Für die Akzeptanztests wurde je ein Testprodukt vor ein Tier (hier einen Hund) gesetzt. Getestet wurde die oben beschrieben Mischung (Muster 4) gegen ein Produkt, das statt des erfindungsgemäßen Fleischersatzes echtes Huhn (Fleisch und Innereien) enthielt. Im Napf befindet sich ca. ein Tagesbedarf des Tieres, wobei der Bedarf abhängig vom Gewicht des Hundes und der Hundegröße festgesetzt wird.

Es wurden insgesamt 52 Testtiere (Haushaltshunde) über vier Tage gefüttert. Die Ergebnisse der Akzeptanztests sind in der nachfolgenden Tabelle aufgeführt:

| | Tag 1 | | | | Tag 2 | | | | Tag 3 | | | | Tag 4 | | | |
|---|---|---|---|---|---|---|---|---|---|---|---|---|---|---|---|---|
| | Muster 2 | | Muster 4 | | Muster 2 | | Muster 4 | | Muster 2 | | Muster 4 | | Muster 2 | | Muster 4 | |
| | n | % | n | % | n | % | n | % | n | % | n | % | n | % | n | % |
| 0 = fraß es gar nicht gern | 7 | 13% | 4 | 8°,6 | 4 | 8°,6 | 9 | 17% | 4 | 8°,6 | 11 | 21% | 6 | 12% | 15 | 29% |
| Skala 1 - 4 | | | 12 | 23% | 3 | 6°,6 | 9 | 17% | 2 | 4°,6 | 8 | 15% | 2 | 4°,6 | 6 | 12% |
| Skala 5 -9 | 37 | 71% | 24 | 46% | 35 | 67% | 28 | 54°,6 | 34 | 65% | 24 | 46% | 33 | 63% | 22 | 42% |
| 10= fraß es sehr gern | 8 | 15% | 12 | 23% | 10 | 19% | 6 | 12% | 12 | 23% | 9 | 17% | 11 | 21% | 9 | 17% |

| | Tag 1 | | Tag 2 | | Tag 3 | | Tag 4 | |
|---|---|---|---|---|---|---|---|---|
| | Muster 2 | Muster 4 | Muster 2 | Muster 4 | Muster 2 | Muster 4 | Muster 2 | Muster 4 |
| Mittelwert | 7,0 | 6,2 | 7,0 | 5,7 | 7,1 | 5,7 | 6,9 | 5,3 |

### Messbeispiel:

### Viskositätsmessung: mittels Viscometer MRVT115; Gerätenummer: 206881

1. Anmischen des entwicklungsgemäßen veganen Tierfutters
2. Auswahl einer passenden Spindel (Spindel 7)
3. Messung der Zähflüssigkeit mittels Viskosimeter (Speed 100)
4. Laufzeit der Messung beträgt 2 Minuten
5. Nach 2 Minuten erfolgt die Dokumentation des Ergebnisses
6. Bestimmung eines Umrechnungsfaktors mittels einer zum Viskosimeter gelieferten Drehscheibe
7. Auswertung der Ergebnisse

Zusätzlich zu den Beispielen muss noch der Hinweis gegeben werden, dass für den Fachmann selbstverständlich klar ist, dass das im Beispiel 2 bereitgestellte erfindungsgemäße vegane Tierfutter noch nicht die Anforderungen der FEDIAF erfüllt. Dem Fachmann ist es aber leicht möglich, durch Wasserreduktion entweder in der Phase 1 oder in der Phase 2 oder in beiden Phasen die fehlenden Bestandteile hinzuzudosieren z. B. mit einem Premix. Dies ist auch möglich, wegen der übrigen, in den bevorzugten erfindungsgemäßen Formen des erfindungsgemäßen veganen Tierfutters beschriebenen Bestandteilen.

## Patentansprüche

1. Veganes Tierfutter, umfassend wenigstens zwei Phasen, wobei die erste Phase eine gelartige Masse ist und die zweite Phase eine stückige Masse ist, und wobei die zweite Phase aus Fleischersatzmasse besteht und 15 - 50 % der Fläche des Tierfutters belegt.

2. Veganes Tierfutter nach Anspruch 1, wobei es sich um Hunde- oder Katzenfutter handelt, wobei Hundefutter bevorzugt ist.

3. Veganes Tierfutter nach Anspruch 1 oder 2, wobei das Futter ein Alleinfutter ist, bevorzugt nach Vorgaben des Futtermittelrechtes und / oder der FEDIAF.

4. Veganes Tierfutter nach einem der vorangehenden Ansprüche, wobei die zweite Phase aus wenigstens zwei optisch unterscheidbaren Stücktypen besteht.

5. Veganes Tierfutter nach einem der vorangehenden Ansprüche, wobei die zweite Phase 20 - 50 Gew-%, bevorzugt 30 - 40 Gew-% bezogen auf das Gesamtgewicht des Tierfutters ausmacht.

6. Veganes Tierfutter nach einem der vorangehenden Ansprüche, wobei die zweite Phase ein veganer Fleischersatz ist, umfassend 20 - 30 Gew-% bezogen auf das Gesamtgewicht des Fleischersatzes hydratisiertes Texturat, wobei das hydratisierte Texturat einen Wasseranteil von 65 - 80 Gew-% bezogen auf das hydratisierte Texturat umfasst, und wobei das hydratisierte Texturat eine durchschnittliche Stücklänge von ≥ 15 mm, bevorzugt ≥ 20 mm besitzt.

7. Veganes Tierfutter nach Anspruch 6, wobei die zweite Phase ein veganer Fleischersatz ist und
- das Texturat Sojaproteintexturat ist und/oder
- 20 bis 30 Gew-% bezogen auf das Gesamtgewicht des Fleischersatzes weiteres pflanzliches Protein bevorzugt Sojaprotein, weiter bevorzugt Sojaproteinextrakt umfasst und/oder
- 5 bis 12 Gew-% bezogen auf das Gesamtgewicht des Fleischersatzes pflanzliches Öl, bevorzugt Sonnenblumenöl umfasst und/oder
- 0,5 bis 2,5 Gew-% bezogen auf das Gesamtgewicht des Fleischersatzes eines Verdickungsmittels, bevorzugt Methycellulose umfasst und/oder
- ein Extrudat ist.

8. Veganes Tierfutter nach einem der vorangehenden Ansprüche, wobei in der ersten Phase optisch erkennbar Obst- und/oder Gemüsestücke und/oder Kräuter enthalten sind.

9. Veganes Tierfutter nach Anspruch 8, wobei die Obst- und/oder Gemüsestücke ausgewählt sind aus Stücken von Gemüsen und Gemüse ausgewählt aus der Gruppe bestehend aus Möhre, Kartoffel, Brokkoli, Erbse, Jackfruit, Kürbis, Pastinake, Spinat und Aroniabeere.

10. Verfahren zur Herstellung eines veganen Tierfutters nach einem der vorangehenden Ansprüche, umfassend die Schritte:
a) Bereitstellen von Material für die erste Phase,
b) Bereitstellen von Material für die zweite Phase,
c) gegebenenfalls Bereitstellen von Obst- und/oder Gemüsestücken und/oder Kräutern und
d) Mischen der bereitgestellten Zutaten.
